# FASCICULE DE BREVET EUROPEEN

(11) **EP 3 049 637 B1**
(45) Date de publication et mention de la délivrance du brevet: **25.01.2023**
(21) Numéro de dépôt: 14790197.9
(22) Date de dépôt: 23.09.2014
(51) Int. Cl.: F01D 5/30, F01D 11/00, F01D 5/08

(54) **ENSEMBLE ROTATIF POUR TURBOMACHINE**
ROTIERENDE ANORDNUNG FUER TURBOMASCHINE
ROTARY ASSEMBLY FOR TURBOMACHINE

(30) Priorité: 25.09.2013 FR 1359237
(43) Date de publication de la demande: 03.08.2016
(73) Titulaire: Safran Aircraft Engines, 75015 Paris (FR)
(72) Inventeur: LEDUC, Mathieu, Louis, Jean, F-77550 Moissy Cramayel Cedex (FR); CARLOS, Pierre-Louis, Alexandre, F-77550 Moissy Cramayel Cedex (FR); ROUSSILLE, Clément, F-33200 Bordeaux (FR)
(74) Mandataire: Ernest Gutmann - Yves Plasseraud S.A.S.
(86) Numéro de dépôt international: PCT/FR2014/052376
(87) Numéro de publication internationale: WO 2015/044579

(56) Documents cités:
- EP-A1- 1 607 579
- EP-A2- 0 286 227
- FR-A1- 2 965 291
- FR-A1- 2 978 793
- US-A1- 2011 027 103

## Description

L'invention se rapporte à un ensemble rotatif pour turbomachine, telle qu'en particulier un turboréacteur d'avion, ainsi qu'à une turbomachine comprenant un tel ensemble.

Un tel ensemble, que l'on retrouve notamment dans une turbine, comprend un disque, et des aubes s'étendant radialement depuis le disque et dont les pieds sont engagés axialement et retenus radialement dans des alvéoles de la périphérie externe du disque, lesdites alvéoles étant disposées en alternance avec des dents du disque. Les aubes comprennent également des plates-formes internes agencées circonférentiellement bout à bout de manière à définir ensemble la limite interne du flux d'écoulement des gaz chauds circulant dans la turbine. La partie de l'aube située intérieurement par rapport à la veine, c'est-à-dire entre la plate-forme interne et le pied, est appelée échasse. Selon cette disposition, des espaces sont formés entre deux échasses adjacentes, et forment des cavités inter-échasses ou inter-aubes. Des cavités dites de fond d'alvéole sont également formées par des espaces radiaux situés entre les pieds d'aubes et les fonds des alvéoles.

Afin d'améliorer les performances de la turbomachine, et d'éviter l'échauffement du disque par le flux des gaz chauds issus d'une chambre de combustion amont et s'écoulant à travers la veine, il est important de limiter au maximum la circulation de ces gaz sous les plates-formes et à travers les cavités inter-aubes, à l'aide de moyens d'étanchéité. En effet, la partie des gaz de veine s'écoulant sous les plates-formes ne participe pas à l'entrainement en rotation des aubes et chauffe directement les dents du disque. Il est particulièrement avantageux d'agencer les moyens d'étanchéité à l'aval des cavités inter-aubes afin d'autoriser une pressurisation de ces cavités à une valeur sensiblement identique à celle des gaz de veine, ce qui limite l'effet d'aspiration dans les cavités.

A cette fin, il est connu de prolonger les plates-formes à leurs extrémités amont et/ou aval par des parois s'étendant radialement vers l'intérieur jusqu'aux dents du disque afin d'obturer axialement les cavités inter-aubes. Toutefois, chaque couple de parois adjacentes est inévitablement séparé circonférentiellement par un interstice autorisant la circulation des gaz de veine. Le nombre d'interstices, correspondant au nombre d'aubes, est alors trop important pour permettre une étanchéité acceptable des cavités inter-aubes.

Selon une autre solution connue, un jonc annulaire métallique, formé d'une paroi annulaire radiale comprenant une seule fente radiale, ou formée approximativement de sept secteurs agencés bout à bout, est agencé en aval des cavités inter-aubes. L'extrémité annulaire externe du jonc est insérée dans une gorge s'étendant sur les faces internes des plates-formes, et son extrémité annulaire interne est maintenue serrée contre les dents du disque et les pieds d'aubes par un élément aval tel qu'un anneau labyrinthe. Le jonc offre l'avantage de ne présenter quasiment aucun interstice de circulation des gaz, une fois monté, et assure donc une bonne étanchéité. Toutefois, en rotation, le jonc s'appuie sur les plates-formes par effet centrifuge avec un effort relativement important, ce qui risque de porter atteinte à l'intégrité des plates-formes, ou nécessite de sur-dimensionner de manière indésirable ces dernières.

En outre, lorsque les aubes sont réalisées en Composite à Matrice Céramique (dans la suite abrégé en C.M.C.), les plates-formes également en C.M.C. sont encore moins aptes à supporter le poids du jonc en rotation, le rapport de densité entre un matériau métallique et un matériau C.M.C. étant compris entre trois et quatre. De plus, le rapport de dilatation en augmentation de température étant compris entre deux et trois, les dilatations différentielles en fonctionnement entre le jonc d'un côté, et les aubes et le disque d'un autre côté, risquent soit d'accentuer les contraintes engendrées sur les plates-formes, soit de laisser apparaitre des jeux autorisant la circulation des gaz de veines au niveau des extrémités radiales du jonc.

EP1 607 579 divulgue un ensemble rotatif pour turbomachine selon le préambule de la revendication 1.

La présente invention apporte une solution simple, efficace et économique au problème d'étanchéité des cavités inter-aubes, tout en s'affranchissant des inconvénients liés aux solutions de l'art antérieur.

A cette fin, elle propose un ensemble rotatif pour turbomachine, selon la revendication 1.

Grâce à l'invention, les plates-formes supportent en rotation une charge bien moins importante, car les moyens d'étanchéité sont dissociés radialement en deux parties, seule la partie externe étant retenue en rotation par les plates-formes. La partie interne pourra être retenue en rotation par exemple par le disque ou par un autre élément rotatif de turbine tel qu'un anneau labyrinthe. Ainsi, la charge supportée par les plates-formes par effet centrifuge peut être très fortement réduite ce qui ouvre plus de liberté de conception au niveau de l'aube, telle qu'une conception en C.M.C., et permet plus généralement de diminuer la fatigue des plates-formes. Par ailleurs, comme les deux parties des moyens d'étanchéité sont capables de déplacements radiaux relatifs, les dilatations différentielles impliquent seulement une modification de la position radiale relative des deux parties, et n'entrainent pas la création de contraintes ou du jeu entre les moyens d'étanchéité et les plates-formes. Enfin, le glissement entre les extrémités radiales en vis-à-vis des deux parties permet de conserver une étanchéité axiale de la zone annulaire s'étendant radialement depuis les plates-formes jusqu'au disque, qui comprend les cavités inter-aubes, cette étanchéité étant équivalente à celle permise par des moyens d'étanchéité formés d'un seul élément annulaire.

En particulier, les extrémités radiales en vis-à-vis de la partie annulaire interne et de la partie annulaire externe sont capables de déplacements radiaux relatifs par glissement de façon étanche.

En particulier, du fait des déplacements radiaux possibles entre lesdites parties annulaires externes et internes, seule une reprise des efforts centrifuges de la partie externe est assurée en rotation par les plates-formes.

Préférentiellement, les moyens d'étanchéité de l'invention sont formés en aval de ladite zone annulaire afin d'autoriser une pressurisation des cavités inter-aubes à une valeur sensiblement identique à celle des gaz de veine, ce qui limite l'effet d'aspiration dans ces cavités.

Selon une autre caractéristique de l'invention, la partie annulaire interne et la partie annulaire externe des moyens d'étanchéité comprennent respectivement deux anneaux maintenus axialement et radialement au regard de la zone annulaire s'étendant radialement entre les plates-formes et le disque.

De tels anneaux rapportés étanchéifient de manière particulièrement efficace les cavités inter-aubes, car leur montage peut facilement être effectué sans formation de jeux laissant fuir les gaz de veine.

Ces anneaux peuvent être des joncs fendus ou sectorisés, en fonction des besoins de montage.

Préférentiellement, des moyens de circulation d'air sont formés sur le disque et/ou la partie interne des moyens d'étanchéité, et configurés de manière à autoriser de l'air à circuler entre l'amont et/ou l'aval de l'ensemble rotatif et les fonds d'alvéoles.

En effet, il est important que malgré le montage des moyens d'étanchéité selon l'invention, un air de refroidissement puisse circuler librement axialement à travers les fonds des alvéoles, afin d'assurer le refroidissement du disque.

Selon une autre caractéristique de l'invention, la partie externe des moyens d'étanchéité comprend une extrémité externe engagée dans une gorge annulaire radiale formée sur les faces internes des plates-formes. De préférence, la partie interne des moyens d'étanchéité assure un blocage axial de la partie externe contre la zone annulaire s'étendant radialement depuis les plates-formes jusqu'au disque.

Avantageusement, la partie interne des moyens d'étanchéité est maintenue radialement par le disque.

La partie interne des moyens d'étanchéité peut être avantageusement maintenue axialement contre le disque et les aubes par un bras annulaire d'un anneau d'étanchéité comprenant des léchettes annulaires destinées à coopérer de façon étanche avec un élément de stator externe.

Un contact axial sera avantageusement réalisé entre la partie interne des moyens d'étanchéité et l'ensemble constitué du disque et des aubes au moins radialement au niveau des zones d'appui entre les dents du disque et les pieds d'aubes en fonctionnement, ceci afin d'assurer l'étanchéité entre les cavités de fond d'alvéole et les cavités inter-aube.

Préférentiellement, la partie interne des moyens d'étanchéité comprend une partie annulaire en crochet engagée avec au moins un rebord d'une des faces du disque pour un blocage relatif radial.

Dans une réalisation particulière de l'invention, les rebords du disque sont formés par des faces internes de plusieurs portions en saillie situées sur une des faces du disque intérieurement par rapport aux fonds des alvéoles du disque, et se suivant circonférentiellement de manière discontinue.

Avantageusement, la partie annulaire en crochet de la partie interne des moyens d'étanchéité s'étend radialement depuis la zone située radialement entre :
- les points d'appui des dents du disque contre les pieds d'aubes en fonctionnement, et
- les fonds des alvéoles,
jusqu'aux faces internes des portions en saillie, et n'est en outre pas en appui axial contre le disque au moins localement.

Grâce à cette réalisation, l'air de refroidissement en entrée ou en sortie des alvéoles peut circuler radialement entre le crochet annulaire de la partie interne et le disque, ainsi qu'au niveau des discontinuités formées entre les portions en saillie, et peut donc communiquer avec un élément étranger à l'ensemble rotatif. De plus, la partie interne des moyens d'étanchéité peut facilement assurer l'étanchéité entre les cavités de fond d'alvéole et les cavités inter-aubes à l'extérieur de la partie annulaire en crochet.

Les rebords du disque peuvent d'une autre manière être formés par des faces internes de plusieurs portions en saillie situées sur les parties externes des faces radiales des dents du disque, et se suivant circonférentiellement de manière discontinue, l'extrémité interne de la partie annulaire en crochet engagée sur ces faces internes étant en outre en contact axial avec les dents du disque et les pieds d'aubes au niveau des points d'appui des dents du disque contre les pieds d'aubes en fonctionnement.

Grâce à cette réalisation, la partie annulaire en crochet laisse libre la circulation de l'air à travers les cavités de fond d'alvéoles. De plus, l'étanchéité entre les cavités de fond d'alvéole et les cavités inter-aubes est conservée grâce à l'extrémité interne de la partie annulaire en crochet en contact sur les dents du disque et les pieds d'aubes.

Selon un premier mode de réalisation, la partie externe des moyens d'étanchéité comprend une paroi tronconique s'étendant vers l'intérieur depuis son extrémité externe, et la partie interne des moyens d'étanchéité comprend à son extrémité externe un rebord annulaire en décrochement et en appui axial contre l'extrémité interne de la paroi tronconique, laquelle peut glisser radialement le long du rebord en décrochement de la partie interne. Un joint annulaire est intercalé axialement entre les extrémités axiales des aubes et la paroi tronconique de la partie externe afin d'appuyer de façon étanche l'extrémité interne de la paroi tronconique contre le rebord annulaire en décrochement de la partie interne.

Grâce à ce mode de réalisation, en rotation, le joint annulaire s'étend vers l'extérieur et contraint la paroi tronconique contre le rebord en décrochement de la partie interne, de façon à assurer une étanchéité optimale.

Selon un second mode de réalisation, la partie interne des moyens d'étanchéité est reliée à son extrémité externe à deux branches annulaires radiales espacées axialement l'une de l'autre, et la partie externe comprend une paroi annulaire radiale dont l'extrémité interne est engagée entre les deux branches de la partie interne et peut s'y déplacer radialement, le jeu axial séparant les deux branches par rapport à la paroi annulaire radiale étant sensiblement nul.

En fonctionnement, la différence de pression entre les cavités inter-aubes et les parties amont et/ou aval de l'ensemble rotatif en liaison avec la veine engendre un décalage angulaire entre les branches de la partie interne et la paroi radiale de la partie externe. Ce décalage angulaire induit un appui le long d'une ligne circonférentielle entre au moins l'une des branches et la paroi radiale, ce qui assure l'étanchéité.

Dans un mode de réalisation préféré de l'invention, les aubes sont à composite à matrice céramique. Comme expliqué plus haut, l'invention permet l'utilisation d'un tel matériau au niveau des aubes sans risquer l'endommagement des plates-formes.

L'invention concerne également une turbine de turbomachine comprenant un ensemble rotatif tel que décrit dans la présente demande de brevet.

L'invention concerne enfin une turbomachine, telle qu'un turboréacteur ou un turbopropulseur, comprenant un ensemble rotatif tel que décrit dans la présente demande de brevet.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en coupe axiale d'une turbine basse-pression de turbomachine selon l'art antérieur ;
- la figure 2 est une vue schématique partielle en perspective depuis l'amont de deux aubes adjacentes montées sur un disque de la turbine de la figure 1 ;
- la figure 3 est une vue schématique en coupe axiale d'un ensemble rotatif selon un premier mode de réalisation l'invention ;
- la figure 4 est une vue en perspective de l'ensemble rotatif de la figure 3 ;
- la figure 5 est une vue schématique en coupe axiale d'un ensemble rotatif selon un deuxième mode de réalisation, n'appartenant pas à l'invention ;
- la figure 6 est une vue schématique en coupe axiale d'un ensemble rotatif selon un troisième mode de réalisation de l'invention.

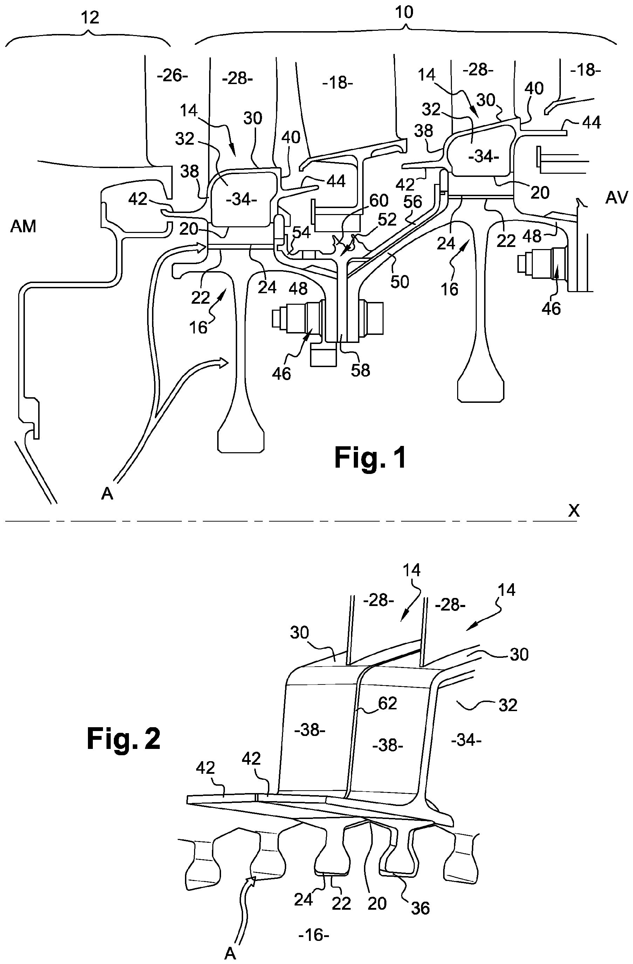

On se réfère tout d'abord à la figure 1 qui représente une turbine basse pression 10 selon la technique antérieure, agencée en aval d'une turbine haute pression 12, et à la figure 2 qui représente plus en particulier deux aubes 14 montées sur un disque rotatif 16 de cette turbine 10. La turbine basse pression 10 comprend une alternance axiale d'étages de rangées annulaires d'aubes fixes 18, appelées distributeurs, et d'étage de disques rotatifs 16 comportant à leurs périphéries une pluralité d'aubes 14, ces étages étant agencés autour d'un axe X de la turbomachine.

Dans le présent mémoire, tout comme dans le domaine technique concerné, les termes amont AM et aval AV sont définis de sorte que l'amont se trouve axialement du côté d'où provient le flux d'écoulement général de la turbomachine, et l'aval se trouve axialement du côté vers lequel s'écoule ce même flux.

Chaque disque 16 comprend à sa périphérie externe des dents (dont le sommet est référencé 20) disposées en alternance avec des alvéoles (dont le fond est référencé 22) dans lesquelles sont engagés axialement et retenus radialement des pieds d'aubes (dont l'extrémité interne est référencée 24), ces aubes 14 s'étendant radialement depuis les alvéoles 22 dans une veine annulaire d'écoulement 26 d'un flux de gaz chaud issu d'une chambre de combustion amont (non représenté).

Plus particulièrement, chaque aube comprend radialement depuis l'extérieur vers l'intérieur une pale 28, une plate-forme 30 s'étendant sensiblement perpendiculairement par rapport à l'axe d'allongement de l'aube 14, et une échasse 32 reliant la plate-forme au pied d'aube 24. Les pieds d'aube 24 ont une forme par exemple en queue d'aronde ou analogue pour assurer leur retenue radiale dans les alvéoles 22. Les plates-formes 30 des aubes sont agencées circonférentiellement bout à bout de manière à définir ensemble la limite interne idéale du flux d'écoulement des gaz chauds circulant dans la turbine. Selon cette disposition, des espaces sont formés entre deux échasses 32 circonférentiellement adjacentes, dans la zone annulaire s'étendant radialement depuis les plates-formes 30 jusqu'au disque 16, et sont appelés des cavités inter-échasses ou inter-aubes 34. Des cavités dites de fond d'alvéole 36 sont également formées par des espaces radiaux séparant les pieds d'aubes 24 des fonds 22 des alvéoles. Des parois 38, 40 s'étendent radialement vers l'intérieur depuis l'amont et l'aval des plates-formes jusqu'aux pieds 24 des aubes et forment des moyens d'étanchéité axiale de la zone annulaire s'étendant radialement depuis les plates-formes 30 jusqu'au disque 16, et donc des cavités inter-aubes 34, en assurant leur obturation.

Cette étanchéité axiale des cavités inter-aubes 34 est importante, car si une partie des gaz de veine circule à travers ces cavités, elle ne participe pas à l'entrainement en rotation des aubes 14 et chauffe directement les dents 20 du disque formant le fond des cavités inter-aubes 34, ce qui conduit à une augmentation de la température des disques 16 pouvant les endommager et réduire leur durée de vie.

La paroi radiale amont 38 de la plate-forme est reliée à un becquet 42 s'étendant vers l'amont et la paroi radiale aval 40 est reliée à un becquet 44 s'étendant vers l'aval. Les becquets 42, 44 s'étendent axialement entre les étages consécutifs de la turbine afin de conserver en partie l'intégrité structurelle de la veine 26 entre chaque étage de turbine, ce qui limite la circulation de gaz chauds radialement vers l'intérieur de la turbine.

Les disques sont fixés les uns aux autres par boulonnage, en 46, de brides annulaires 48, 50 s'étendant axialement les unes en direction des autres depuis chaque disque. Un anneau labyrinthe 52 est également positionné axialement entre chaque couple de disques 16 adjacents et comprend des bras annulaires amont et aval 54, 56 s'étendant axialement jusqu'à ces disques. Les brides de fixation 48, 50 entre les disques sont ainsi protégées des gaz de veine par les bras 54, 56 de l'anneau labyrinthe 52. L'anneau labyrinthe 52 comprend en outre une paroi annulaire radiale interne 58 de fixation au boulonnage 46 des brides 48, 50 des disques, et coopère par des léchettes 60 annulaires externes avec les extrémités internes des aubes 18 des distributeurs, afin de limiter la circulation des gaz de veine intérieurement par rapport à ces aubes 18.

Afin d'assurer le bon fonctionnement de la turbomachine, un air de refroidissement A est prélevé, dans un compresseur basse-pression ou haute-pression par exemple, et acheminé vers la partie interne de la turbine jusqu'aux cavités de fond d'alvéole 36 afin d'assurer le refroidissement du disque 16 et de protéger ce dernier de l'échauffement provoqué par les gaz chauds du flux de veine 26. Afin d'autoriser la circulation de l'air de refroidissement A en aval des cavités 36 de fond d'alvéole, ces dernières débouchent en aval intérieurement par rapport au bras 54 de l'anneau labyrinthe 52 en appui axial sur le disque 16. Cette configuration permet à l'air de refroidissement A de circuler plus en aval radialement entre l'anneau labyrinthe 52 et les brides 48, 50 de fixation entre les disques 16, afin d'en assurer également le refroidissement.

En fonctionnement, les gaz chauds circulant dans la veine 26 peuvent circuler à travers des interstices 62 formés entre les bords en vis-à-vis circonférentiel des parois radiales amont et aval 38, 40 reliées aux plates-formes 30 et recouvrant axialement les cavités inter-aubes 34. Le nombre d'interstices 62 est relativement élevé puisqu'il dépend directement du nombre de plates-formes 30 formant la limite interne de la veine, ce qui induit une fuite totale non négligeable à travers les cavités inter-aubes, qui nuit aux performances de la turbine. Par ailleurs, la géométrie de l'assemblage formé par ces parois radiales 38, 40 et les plates-formes 30 n'autorise pas à réaliser les aubes en Composite à Matrice Céramique (C.M.C.), car cela générerait notamment des problèmes de flexion des fibres du matériau lors de la fabrication. Les récents développements conduisent en effet à utiliser des aubes réalisées en matériau C.M.C. L'utilisation de ce type de matériau permet de réduire le poids des aubes et d'augmenter leur résistance aux températures élevées.

Afin de pouvoir réaliser les aubes 14 en C.M.C, ou de limiter les fuites au sein des cavités inter-aubes 34, il est donc nécessaire de concevoir de nouveaux moyens d'étanchéité axiale de la zone annulaire s'étendant radialement depuis les plates-formes 30 jusqu'au disque 16, ces moyens d'étanchéité ne devant pas générer un poids trop important supporté par les plates-formes en rotation, du aux effets centrifuges.

Il est ainsi conseillé d'utiliser des moyens d'étanchéité pouvant s'agencer à l'amont et/ou plus avantageusement à l'aval de cette zone, et se présentant en deux parties annulaires structurellement distinctes l'une de l'autre, l'une interne 64 et l'autre externe 66. En outre, seule la partie externe 66 des moyens d'étanchéité est retenue par les plates-formes 30 en rotation. Ainsi, la charge supportée par les plates-formes 30 est diminuée. De plus, il est proposé de former ces deux parties de manière que leurs extrémités radiales en vis-à-vis puissent se déplacer radialement l'une par rapport à l'autre, afin que les dilatations relatives entre l'aube 14 et ces moyens d'étanchéité 64, 66 ne résultent qu'en un déplacement relatif entre ces deux parties, et non en apparition de contraintes sur les plates-formes 30 ou de jeux radiaux. Afin de ne pas autoriser de fuites entre ces deux parties, leurs extrémités radiales sont en outres formées de manière à glisser l'une sur l'autre de façon étanche.

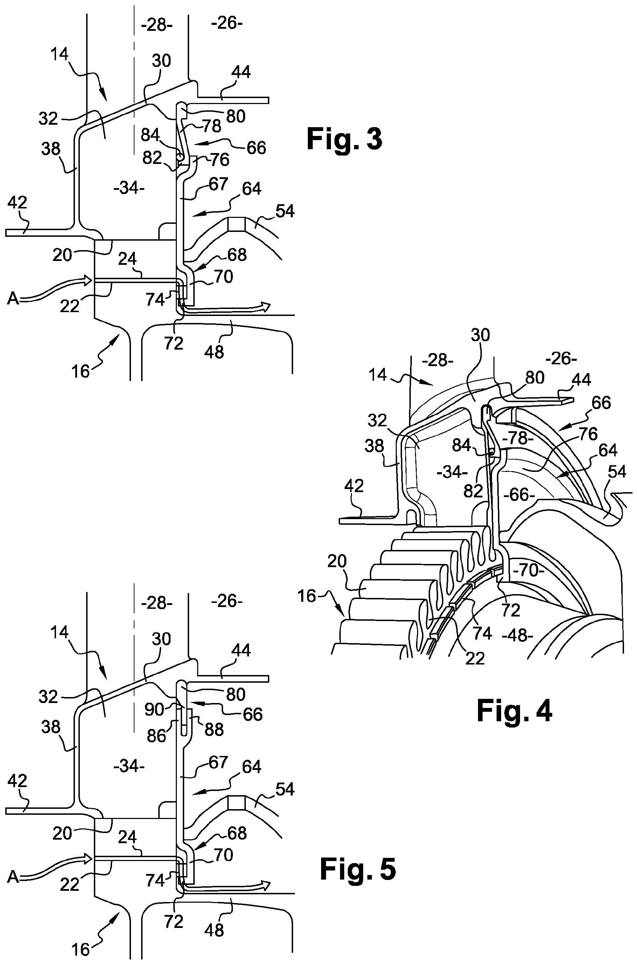

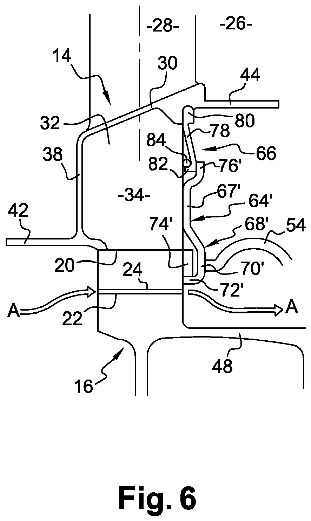

La solution proposée, d'après les caractéristiques principales évoquées ci-dessus, peut se décliner structurellement selon trois exemples non limitatifs représentés le premier aux figures 3 et 4, le deuxième à la figure 5, et le troisième à la figure 6.

Dans le premier exemple représenté aux figures 3 et 4, on forme les moyens d'étanchéité à l'aval de la zone annulaire s'étendant radialement depuis les plates-formes 30 jusqu'au disque 16, et comprenant les cavités inter-aubes 34. De manière équivalente et symétrique, il est possible de placer ces moyens d'étanchéité à l'amont de cette zone.

Ainsi, selon l'exemple décrit aux figures 3 et 4, les plates-formes 30 sont reliées à leurs extrémités amont à des parois 38 s'étendant radialement jusqu'aux dents 20 des disques, et comprenant chacun au voisinage de leurs extrémités internes des becquets 42 s'étendant vers l'amont. Les plates-formes 30 sont en outre chacune reliées à leurs extrémités aval à un becquet 44 s'étendant vers l'aval.

La partie interne 64 des moyens d'étanchéité est formée d'un anneau, c'est-à-dire d'une pièce s'étendant annulairement, de préférence fendu, mais qui peut également être formé de plusieurs secteurs agencés circonférentiellement bout à bout. Cet anneau interne 64 s'étend radialement de l'intérieur vers l'extérieur depuis une zone du disque située entre les alvéoles 22 et les brides 48 du disque 16 jusqu'à approximativement le milieu des échasses 32. Il comprend une paroi radiale principale 67 qui est maintenue en appui contre les extrémités aval des échasses 32 et des dents 20 du disque par un bras annulaire amont 54 d'un anneau labyrinthe aval.

L'anneau interne 64 comprend en outre à son extrémité interne une partie annulaire en crochet 68 engagée sur le disque 16, et destinée à bloquer radialement l'anneau 64. Cette partie en crochet 68, reliée à l'extrémité interne de la paroi radiale principale 67, commence à s'étendre radialement de l'extérieur vers l'extérieur au niveau des dents 20 du disque, juste à l'intérieur de la zone d'appui du bras annulaire 54 de l'anneau labyrinthe, et à l'intérieur des zones d'appui entre les dents 20 du disque et les pieds d'aubes 24 en fonctionnement. Elle comprend une paroi annulaire 70 écartée axialement du disque 16 et s'étendant vers l'intérieur, et reliée à son extrémité interne à un rebord 72 annulaire orienté vers l'amont. Ce rebord 72 s'engage avec des portions en saillie 74 formées de manière discontinue circonférentiellement sur la face aval du disque 16, radialement entre les dents 20 du disque et les brides 48, et qui comprennent chacune une paroi cylindrique interne d'appui du rebord 72 de la partie en crochet 68.

L'air de refroidissement A provenant des cavités de fond d'alvéole peut s'échapper vers l'aval dans l'espace annulaire axial laissé entre le disque 16 et la partie en crochet 68, et circuler vers l'intérieur entre les portions en saillie 74 du disque, entre le rebord 72 de la partie en crochet et le disque, pour enfin longer axialement la bride aval 48 du disque.

La partie interne 64 des moyens d'étanchéité comprend à son extrémité externe un rebord 76 annulaire en décrochement vers l'aval par rapport à la paroi radiale principale 67. Ce rebord est destiné à venir en appui axial vers l'amont contre la partie externe 66 des moyens d'étanchéité pour en assurer le maintien axial contre les aubes 14.

La partie externe 66 des moyens d'étanchéité est formée d'un anneau, c'est-à-dire d'une pièce s'étendant annulairement, de préférence formé de six à huit secteurs agencés circonférentiellement bout à bout, mais qui peut également être fendu. Cet anneau externe 66 s'étend radialement depuis les plates-formes 30 jusqu'au rebord externe en décrochement 76 de la partie interne des moyens d'étanchéité. Il comprend une paroi tronconique 78 principale s'étendant vers l'intérieur et vers l'aval depuis une extrémité externe engagée dans une gorge 80 radiale formée sur les faces internes des plates-formes 30. La paroi tronconique 78 est de plus reliée à son extrémité interne à un rebord annulaire 82 orienté vers l'amont. Un joint annulaire 84 est agencé axialement entre les extrémités aval des échasses 32, et la partie interne de la paroi tronconique 78. Le joint 84 est retenu radialement par le rebord interne 82 de la paroi tronconique.

L'extrémité interne de la paroi tronconique 78 est agencée en contact sur la face amont du rebord externe en décrochement 76 de la partie interne 64 des moyens d'étanchéité. En fonctionnement, le joint annulaire 84 s'étend circonférentiellement et repousse la paroi tronconique 78 vers l'aval, ce qui permet de contraindre axialement l'extrémité interne de la paroi tronconique 78 contre le rebord en décrochement 76 de la partie interne, de manière à rendre étanche l'interface entre la partie interne 64 et la partie externe 66 des moyens d'étanchéité. De plus, le rebord en décrochement 76 de la partie interne présente une dimension radiale suffisante pour permettre à l'extrémité interne de la paroi tronconique 78 de glisser radialement le long de sa surface amont, tout en conservant l'étanchéité entre les deux parties.

Comme il ressort de cette réalisation, seule la partie externe 66 des moyens d'étanchéité est supportée en rotation par les plates-formes 30, par son appui dans la gorge 80 des faces internes des plates-formes. La partie interne 64 est quant à elle retenue exclusivement dans cette solution par le disque 16 grâce à la partie en crochet 68 engagée sur les portions en saillie 74.

Dans l'exemple représenté à la figure 5, la réalisation diffère de l'exemple représenté aux figures 3 et 4 seulement en ce que la paroi radiale 67 de la partie interne 64 des moyens d'étanchéité est reliée à son extrémité externe à deux branches radiales 86, 88 annulaires écartées axialement, de manière similaire à une fourchette, et en ce que la partie externe 66 des moyens d'étanchéité comprend une paroi radiale 90 annulaire s'étendant depuis son extrémité externe, et s'engageant axialement entre les deux branches radiales 86, 88.

En fonctionnement, la différence de pression entre les cavités inter-aubes 34 et la zone aval des moyens d'étanchéité induit une rotation vers l'aval des extrémités en vis-à-vis des parties interne 64 et externe 66 des moyens d'étanchéité, ce qui entraine une mise en contact de la paroi radiale 90 de la partie externe contre l'une des branches 86, 88 de la partie interne, afin d'assurer l'étanchéité. Comme pour le premier exemple, un glissement entre les deux parties est autorisé par la dimension radiale des branches, tout en conservant l'étanchéité.

Dans le dernier exemple de réalisation représenté à la figure 6, la réalisation diffère de l'exemple représenté aux figures 3 et 4 seulement en ce que les portions en saillie 74' sont formées non pas radialement entre les alvéoles 22 et les brides 48, mais sur les dents 20 du disque, extérieurement aux cavités de fond d'alvéole 36. La paroi principale 67' de la partie interne 64' des moyens d'étanchéité est raccourcie radialement afin que la partie annulaire en crochet 68' s'engage par son rebord interne 72' sur ces portions en saillie 74'. Le bras annulaire 54 de l'anneau labyrinthe aval est en appui non plus sur la paroi principale 67, mais sur la paroi annulaire 70' de la partie en crochet 68'. Il est à noter qu'un contact axial est assuré entre le rebord interne 72' de la partie en crochet et l'alternance circonférentielle des dents 20 du disque et des pieds d'aubes 24, et ceci radialement au niveau des zones d'appui entre les dents 20 du disque et les pieds d'aubes 24 en fonctionnement, afin d'assurer l'étanchéité entre les cavités de fond d'alvéole 36 et les cavités inter-aube 34.

Par rapport aux autres exemples décrits, cette solution permet de réduire les contraintes exercées sur la partie interne des moyens d'étanchéité, car sa taille plus réduite permet d'éviter l'apparition de gradients thermiques importants. En revanche, la localisation des portions en saillie 74' sur les dents 20 du disque implique une concentration de contraintes mécaniques plus élevées au niveau des parties internes des dents 20 du disque rattachées au disque, ces portions en saillie 74' servant à la retenue de la partie interne des moyens d'étanchéité en fonctionnement.

## Revendications

1. Ensemble rotatif pour turbomachine, comprenant :
- un disque (16) ayant une périphérie externe présentant une alternance d'alvéoles (22) et de dents (20),
- des aubes (14) s'étendant radialement depuis le disque (16) et dont des pieds (24) sont engagés axialement et retenus radialement dans les alvéoles (22) du disque, les aubes présentant un côté amont et un côté aval,
- des plates-formes (30) s'étendant circonférentiellement depuis les aubes (14) et qui sont agencées circonférentiellement bout à bout, les unes vis-à-vis des autres,
- des moyens d'étanchéité axiale de l'un au moins des côtés amont et aval, à l'endroit d'une zone annulaire s'étendant radialement entre les plates-formes (30) et le disque (16),
**caractérisé en ce que** lesdits moyens d'étanchéité comprennent radialement une partie annulaire interne (64) et une partie annulaire externe (66) structurellement distinctes l'une de l'autre, la partie externe (66) des moyens d'étanchéité comprenant une paroi tronconique (78) s'étendant vers l'intérieur depuis son extrémité externe, et la partie interne (64) des moyens d'étanchéité comprenant à son extrémité externe un rebord annulaire en décrochement (76) et en appui axial contre l'extrémité interne de la paroi tronconique (78), laquelle peut glisser radialement le long du rebord en décrochement (76) de la partie interne (64), un joint annulaire (84) circonférentiel étant intercalé axialement entre les extrémités axiales des aubes (14) et la paroi tronconique (78) de la partie externe, l'extrémité interne de la paroi tronconique (78) étant en contact contre la face amont du rebord externe en décrochement (76) de la partie interne (64), de sorte que le joint annulaire (84) puisse repousser la paroi tronconique (78) vers l'aval, permettant ainsi de contraindre axialement l'extrémité interne de la paroi tronconique (78) contre le rebord en décrochement (76) de la partie interne (64).

2. Ensemble rotatif selon la revendication 1, caractérisé en ce la partie annulaire interne (64) etla partie annulaire externe (66) présentent des extrémités radiales en vis-à-vis capables de déplacements radiaux relatifs par glissement de façon étanche, seule une reprise des efforts centrifuges de la partie externe étant assurée en rotation par les plates-formes (30).

3. Ensemble rotatif selon la revendication 1 ou 2, **caractérisé en ce que** la partie annulaire interne (64) et la partie annulaire externe (66) des moyens d'étanchéité comprennent chacun un anneau maintenu axialement et radialement en regard de la zone annulaire s'étendant radialement entre les plates-formes (30) et le disque (16).

4. Ensemble rotatif selon l'une des revendications 1 à 3, **caractérisé en ce que** des moyens de circulation d'air sont formés sur l'un parmi le disque (16) et la partie interne (64) des moyens d'étanchéité, et configurés de manière à autoriser de l'air (A) à circuler entre l'amont et l'aval de l'ensemble rotatif et les alvéoles (22).

5. Ensemble rotatif selon l'une des revendications précédentes, **caractérisé en ce que** la partie externe (66) des moyens d'étanchéité comprend une extrémité externe engagée dans une gorge (80) annulaire radiale formée sur les faces internes des plates-formes (30), et **en ce que** la partie interne (64) des moyens d'étanchéité assure un blocage axial de la partie externe (66) contre la zone annulaire s'étendant radialement depuis les plates-formes (30) jusqu'au disque (16).

6. Ensemble rotatif selon l'une des revendications précédentes, **caractérisé en ce que** la partie interne (64) des moyens d'étanchéité est maintenue radialement par le disque.

7. Ensemble rotatif selon l'une des revendications précédentes, **caractérisé en ce que** :
- il comprend un anneau d'étanchéité (52) comprenant un bras annulaire (54) et des léchettes annulaires (60) adaptées à coopérer de façon étanche avec un élément de stator externe, et
- la partie interne (64) des moyens d'étanchéité est maintenue axialement contre le disque (16) et les aubes (14) par ledit bras annulaire (54).

8. Ensemble rotatif selon l'une des revendications précédentes, **caractérisé en ce que**
- la partie interne (64) des moyens d'étanchéité comprend une partie annulaire en crochet (68) engagée avec au moins un rebord d'une des faces du disque pour un blocage relatif radial,
- et les rebords du disque sont formés par des faces internes de plusieurs portions en saillie (74) situées sur une des faces du disque intérieurement par rapport aux fonds des alvéoles (22) du disque, et se suivant circonférentiellement de manière discontinue, la partie annulaire en crochet (68) de la partie interne (64) des moyens d'étanchéité s'étendant radialement depuis la zone située radialement entre :
∘ les points d'appui des dents (20) du disque contre les pieds d'aubes (24) en fonctionnement, et
∘ les fonds des alvéoles (22),
jusqu'aux faces internes des portions en saillie (74), la partie annulaire en crochet (68) n'étant en outre pas en appui axial contre le disque (16) au moins localement de manière à autoriser de l'air (A) à circuler entre l'amont et/ou l'aval de l'ensemble rotatif et les alvéoles (22).

9. Ensemble rotatif selon l'une des revendications 1 à 7, **caractérisé en ce que**
- la partie interne (64) des moyens d'étanchéité comprend une partie annulaire en crochet (68) engagée avec au moins un rebord d'une des faces du disque pour un blocage relatif radial,
- et les rebords du disque sont formés par des faces internes de plusieurs portions en saillie (74) situées sur les parties externes des faces radiales des dents (20) du disque, et se suivant circonférentiellement de manière discontinue, l'extrémité interne de la partie annulaire en crochet (68) engagée sur ces faces internes étant en outre en contact axial avec les dents (20) du disque et les pieds d'aubes (24) au niveau des points d'appui des dents (20) du disque contre les pieds d'aubes (24) en fonctionnement.

10. Ensemble rotatif selon l'une des revendications précédentes, caractérisé en ce les aubes (14) sont en composite à matrice céramique.

11. Turbine de turbomachine, **caractérisée en ce qu'**elle comprend un ensemble rotatif selon l'une des revendications précédentes.

12. Turbomachine, telle qu'un turboréacteur ou un turbopropulseur, **caractérisée en ce qu'**elle comprend un ensemble rotatif selon l'une des revendications 1 à 11.

## Patentansprüche

1. Rotierende Anordnung für ein Turbotriebwerk, enthaltend:
- eine Scheibe (16) mit einem Außenumfang, der eine Wechselfolge von Vertiefungen (22) und Zähnen (20) aufweist,
- Schaufeln (14), die sich von der Scheibe (16) aus radial erstrecken und deren Schaufelfüße (24) axial in die Vertiefungen (22) der Scheibe eingreifen und radial darin festgehalten werden, wobei die Schaufeln eine stromaufwärtige Seite und eine stromabwärtige Seite aufweisen,
- Plattformen (30), die sich von den Schaufeln (14) aus in Umfangsrichtung erstrecken und in Umfangsrichtung stumpf aneinanderstoßend angeordnet sind,
- Dichtungsmittel zum axialen Abdichten zumindest einer aus stromaufwärtiger und stromabwärtiger Seite an der Stelle eines ringförmigen Bereichs, der sich radial zwischen den Plattformen (30) und der Scheibe (16) erstreckt,
**dadurch gekennzeichnet, dass** die Dichtungsmittel radial einen inneren Ringabschnitt (64) und einen äußeren Ringabschnitt (66) aufweisen, die strukturell voneinander getrennt sind, wobei der äußere Abschnitt (66) der Dichtungsmittel eine kegelstumpfförmige Wand (78) aufweist, die sich von seinem äußeren Ende aus nach innen erstreckt, und der innere Abschnitt (64) der Dichtungsmittel an seinem äußeren Ende eine abgesetzte ringförmige Randkante (76) aufweist, die axial gegen das innere Ende der kegelstumpfförmigen Wand (78) anliegt, welches radial entlang der abgesetzten Randkante (76) des inneren Abschnitts (64) gleiten kann, wobei ein umlaufender Dichtungsring (84) axial zwischen den axialen Enden der Schaufeln (14) und der kegelstumpfförmigen Wand (78) des äußeren Abschnitts eingefügt ist, wobei das innere Ende der kegelstumpfförmigen Wand (78) die stromaufwärtige Seite der abgesetzten äußeren Randkante (76) des inneren Abschnitts (64) berührt, so dass der Dichtungsring (84) die kegelstumpfförmige Wand (78) in Richtung stromabwärts beaufschlagen kann, wodurch das innere Ende der kegelstumpfförmigen Wand (78) axial an die abgesetzte Randkante (76) des inneren Abschnitts (64) gedrückt werden kann.

2. Rotierende Anordnung nach Anspruch 1,
**dadurch gekennzeichnet, dass** der innere Ringabschnitt (64) und der äußere Ringabschnitt (66) radial gegenüberliegende Enden aufweisen, die in abgedichteter Weise radial zueinander verschiebbar sind, wobei bei Rotation lediglich eine Aufnahme der Zentrifugalkräfte des äußeren Abschnitts mittels der Plattformen (30) gewährleistet ist.

3. Rotierende Anordnung nach Anspruch 1 oder 2,
**dadurch gekennzeichnet, dass** der innere Ringabschnitt (64) und der äußere Ringabschnitt (66) der Dichtungsmittel jeweils einen Ring aufweisen, der axial und radial gegenüber dem ringförmigen Bereich gehalten wird, der sich radial zwischen den Plattformen (30) und der Scheibe (16) erstreckt.

4. Rotierende Anordnung nach einem der Ansprüche 1 bis 3,
**dadurch gekennzeichnet, dass** Luftzirkulationsmittel entweder auf der Scheibe (16) oder dem inneren Abschnitt (64) der Dichtungsmittel ausgebildet und dazu ausgelegt sind, dass Luft (A) zwischen der stromaufwärtigen und der stromabwärtigen Seite der rotierenden Anordnung und den Vertiefungen (22) zirkulieren kann.

5. Rotierende Anordnung nach einem der vorhergehenden Ansprüche, **dadurch gekennzeichnet, dass** der äußere Abschnitt (66) der Dichtungsmittel ein äußeres Ende aufweist, das in eine radiale Ringnut (80) eingreift, die an den Innenseiten der Plattformen (30) ausgebildet ist, und dass der innere Abschnitt (64) der Dichtungsmittel eine axiale Sicherung des äußeren Abschnitts (66) gegen den ringförmigen Bereich gewährleistet, der sich von den Plattformen (30) radial bis zur Scheibe (16) erstreckt.

6. Rotierende Anordnung nach einem der vorhergehenden Ansprüche, **dadurch gekennzeichnet, dass** der innere Abschnitt (64) der Dichtungsmittel von der Scheibe radial gehalten wird.

7. Rotierende Anordnung nach einem der vorhergehenden Ansprüche, **dadurch gekennzeichnet, dass**
- sie einen Dichtungsring (52) aufweist, der einen ringförmigen Arm (54) und ringförmige Lippen (60) zum abdichtenden Zusammenwirken mit einem äußeren Statorelement aufweist, und
- der innere Abschnitt (64) der Dichtungsmittel über den ringförmigen Arm (54) axial an der Scheibe (16) und den Schaufeln (14) gehalten wird.

8. Rotierende Anordnung nach einem der vorhergehenden Ansprüche, **dadurch gekennzeichnet, dass**
- der innere Abschnitt (64) der Dichtungsmittel einen hakenförmigen Ringabschnitt (68) umfasst, der mit mindestens einer Randkante einer der Seiten der Scheibe in Eingriff steht, um eine relative radiale Sicherung zu bewirken,
- und die Randkanten der Scheibe aus Innenflächen mehrerer vorstehender Abschnitte (74) gebildet sind, die auf der einen Seite der Scheibe innenseitig von den Böden der Vertiefungen (22) der Scheibe angeordnet sind und in Umfangsrichtung diskontinuierlich aufeinander folgen, wobei der hakenförmige Ringabschnitt (68) des inneren Abschnitts (64) der Dichtungsmittel ausgehend von dem Bereich radial zwischen:
• den Auflagepunkten der Zähne (20) der Scheibe an den Schaufelfüßen (24) im Betrieb, und
• den Böden der Vertiefungen (22)
sich radial bis zu den Innenseiten der vorspringenden Abschnitte (74) erstreckt, wobei der hakenförmige Ringabschnitt (68) ansonsten nicht zumindest bereichsweise axial an der Scheibe (16) anliegt, so dass Luft (A) zwischen der stromaufwärtigen und/oder der stromabwärtigen Seite der rotierenden Anordnung und den Vertiefungen (22) zirkulieren kann.

9. Rotierende Anordnung nach einem der Ansprüche 1 bis 7,
**dadurch gekennzeichnet, dass**
- der innere Abschnitt (64) der Dichtungsmittel einen hakenförmigen Ringabschnitt (68) aufweist, der mit mindestens einer Randkante einer der Seiten der Scheibe in Eingriff steht, um eine relative radiale Sicherung zu bewirken,
- und die Randkanten der Scheibe aus Innenflächen mehrerer vorstehender Abschnitte (74) gebildet sind, die an den äußeren Abschnitten der radialen Flächen der Zähne (20) der Scheibe angeordnet sind und in Umfangsrichtung diskontinuierlich aufeinander folgen, wobei das innere Ende des hakenförmigen Ringabschnitts (68), das mit diesen Innenflächen in Eingriff steht, ansonsten die Zähne (20) der Scheibe und die Schaufelfüße (24) an den Punkten axial berührt, an denen die Zähne (20) der Scheibe im Betrieb an den Schaufelfüßen (24) anliegen.

10. Rotierende Anordnung nach einem der vorhergehenden Ansprüche, **dadurch gekennzeichnet, dass** die Schaufeln (14) aus einem Verbundwerkstoff mit keramischer Matrix bestehen.

11. Turbine eines Turbotriebwerks,
**dadurch gekennzeichnet, dass** sie eine rotierende Anordnung nach einem der vorhergehenden Ansprüche umfasst.

12. Turbotriebwerk, wie etwa Turbostrahltriebwerk oder Turboprop-Triebwerk,
**dadurch gekennzeichnet, dass** es eine rotierende Anordnung nach einem der Ansprüche 1 bis 10 umfasst.

## Claims

1. A rotary assembly for a turbomachine, comprising:
- a disc (16) having an external periphery having an alternation of slots (22) and teeth (20),
- blades (14) extending radially from the disc (16), and roots (24) of which are engaged axially and held radially in the slots (22) of the disc, the blades having an upstream side and a downstream side,
- platforms (30) extending circumferentially from the blades (14) and which are arranged circumferentially end to end, opposite each other,
- axial sealing means for at least one of an upstream and downstream sealing of an annular zone extending radially between the platforms (30) and the disc (16),
**characterised in that** said sealing means comprise radially an internal annular part (64) and an external annular part (66) structurally separate from each other, the external part (66) of the sealing means comprising a frustoconical wall (78) extending inwards from its external end, and the internal part (64) of the sealing means comprising at its external end an annular rim (76) having a step and which is in axial abutment against the internal end of the frustoconical wall (78), which can slide radially along the stepped rim (76) of the internal part (64), an annular seal (84) being interposed axially between the axial ends of the blades (14) and the frustoconical wall (78) of the external part, the internal end of the frustoconical wall (78) being arranged in contact with the upstream face of the external stepped rim (76) of the internal wall (64), so that the annular seal (84) can push the frustoconical wall (78) downstream, which makes it possible to axially force the internal end of the frustoconical wall (78) against the stepped rim (76) of the internal part (64).

2. A rotary assembly according to claim 1, **characterised in that** the facing radial ends of the internal annular part (64) and of the external annular part (66) are adapted for a relative radial movements by sliding sealingly, only an absorption of the centrifugal forces of the external part being provided in rotation by the platforms (30).

3. A rotary assembly according to claim 1 or 2, **characterised in that** the internal annular part (64) and the external annular part (66) of the sealing means comprise respectively two rings held axially and radially opposite the annular zone extending radially between the platforms (30) and the disc (16).

4. A rotary assembly according to one of claims 1 to 3, **characterised in that** air circulation means are formed on the disc (16) and/or the internal part (64) of the sealing means, and configured so as to allow air (A) to circulate between the upstream side and/or downstream side of the rotary assembly and the slots (22).

5. A rotary assembly according to one of the preceding claims, **characterised in that** the external part (66) of the sealing means comprises an external end engaged in a radial annular groove (80) formed on the internal faces of the platforms (30), and **in that** the internal part (64) of the sealing means provides axial locking of the external part (66) against the annular zone extending radially from the platforms (30) as far as the disc (16).

6. A rotary assembly according to one of the preceding claims, **characterised in that** the internal part (64) of the sealing means is held radially by the disc.

7. A rotary assembly according to one of the preceding claims, **characterised in that**:
- it comprises a sealing ring (52) comprising an annular arm (54) and annular sealing lips (60) intended to cooperate sealingly with an external stator element, and
- the internal part (64) of the sealing means is held axially against the disc (16) and the blades (14) by said annular arm (54).

8. A rotary assembly according to one of the preceding claims, **characterised in that**
- the internal part (64) of the sealing means comprises an annular hook part (68) engaged with at least one rim of one of the faces of the disc for a radial relative locking,
- and the rims of the disc are formed by internal faces of a plurality of projecting portions (74) situated on one of the faces of the disc internally with respect to the bottoms of the slots (22) of the disc, and following each other circumferentially discontinuously, the annular hook part (68) of the internal part (64) of the sealing means extending radially from the zone situated radially between:
∘ the locations where the teeth (20) of the disc bear against the blade roots (24) in operation, and
∘ the bottoms of the slots (22),
as far as the internal faces of the projecting portions (74), the annular hook part (68) furthermore not being in axial abutment against the disc (16) at least locally so as to enable air (A) to circulate between the upstream and/or downstream side of the rotary assembly and the slots (22).

9. A rotary assembly according to one of claims 1 to 7, **characterised in that**
- the internal part (64) of the sealing means comprises an annular hook part (68) engaged with at least one rim of one of the faces of the disc for radial relative locking,
- and the rims of the disc are formed by internal faces of a plurality of projecting portions (74) situated on the external parts of the radial faces of the teeth (20) of the disc, and follow each other circumferentially discontinuously, the internal end of the annular hook part (68) engaged on these internal faces being furthermore in axial contact with the teeth (20) of the disc and the blade roots (24) at the locations where the teeth (20) of the disc bear against the blade roots (24) in operation.

10. A rotary assembly according to one of the preceding claims, **characterised in that** the blades (14) comprise a ceramic matrix composite.

11. A turbomachine turbine, **characterised in that** it comprises a rotary assembly according to one of the preceding claims.

12. A turbomachine, such as a turbojet engine or turboprop engine, **characterised in that** it comprises a rotary assembly according to one of claims 1 to 10.
